(19)

**Europäisches Patentamt**
**European Patent Office**
**Office européen des brevets**

(11) **EP 4 611 154 A1**

(12) **EUROPEAN PATENT APPLICATION**

(43) Date of publication:
**03.09.2025 Bulletin 2025/36**

(21) Application number: **25159629.2**

(22) Date of filing: **24.02.2025**

(51) International Patent Classification (IPC):
**H01M 50/44** (2021.01)  **H01M 50/443** (2021.01)
**H01M 10/056** (2010.01)

(52) Cooperative Patent Classification (CPC):
**H01M 50/44; H01M 10/056; H01M 50/443;**
H01M 50/446; H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.02.2024 KR 20240027707**

(71) Applicants:
• **SK Innovation Co., Ltd.**
**Seoul 03188 (KR)**

• **SK ie technology Co., Ltd.**
**Jongno-gu**
**Seoul**
**03188 (KR)**

(72) Inventors:
• **JI, Sang Yoon**
**34124 Daejeon (KR)**
• **AHN, Jun Hwan**
**34124 Daejeon (KR)**
• **LEE, Chang Hee**
**34124 Daejeon (KR)**

(74) Representative: **Prüfer & Partner mbB**
**Patentanwälte · Rechtsanwälte**
**Sohnckestraße 12**
**81479 München (DE)**

(54) **ELECTROCHEMICAL DEVICE INCLUDING POROUS SEPARATOR**

(57)    Electrochemical devices are disclosed for various applications such as secondary batteries. In an embodiment, an electrochemical device includes a positive electrode, a negative electrode, a separator, and an electrolyte. The separator includes a porous separator including inorganic fibers or including inorganic particles and a polymer binder, and the electrolyte includes a nitrile-based compound. The electrochemical device exhibits high ionic conductivity by including the porous separator having wettability to the electrolyte.

FIG. 1

EP 4 611 154 A1

## Description

### TECHNICAL FIELD

The technology and implementations disclosed in this patent document generally relates to an electrochemical device.

### BACKGROUND

An electrochemical device is commonly manufactured by forming cells each including a negative electrode, a positive electrode, and a separator disposed between the negative electrode and the positive electrode, and subsequently assembling the cells by winding them into a cylindrical shape or stacking them in a layered structure. The assembled cells are then inserted into a pouch, into which an electrolyte such as a liquid phase electrolyte is injected. Such an electrolyte serves to enable efficient ion transport between the electrodes, and generally includes a solvent and a salt.

Recently, there has been an increasing demand for electrochemical devices with large capacities to enable their application such as electric vehicles, energy storage devices, and similar technologies. However, as the capacity of the electrochemical device increases, the risk of fire and explosion also increases, necessitating enhanced heat resistance and safety measures for the electrochemical device. Hence, the safe electrochemical device with large capacity is desired.

### SUMMARY

The disclosed technology can be implemented in some embodiments to provide an electrochemical device that includes an electrolyte including a nitrile-based compound and a porous separator having wettability to the electrolyte. This addresses problems of conventional hydrophobic films or separators such as polyolefin-based films when used with an electrolyte comprising a nitrile-based compound, where wettability may be reduced and electrical resistance may be increased. The presently disclosed technology therefore can be implemented in some embodiments to provide an electrochemical device with higher thermal stability and in keeping nonflammability when the electrolyte comprises a nitrile-based compound.

In one general aspect, an electrochemical device includes a positive electrode, a negative electrode, a separator, and an electrolyte, wherein the separator includes a porous separator including inorganic fibers or inorganic particles, and optionally a polymer binder, and the electrolyte includes a nitrile-based compound. In some implementations, the separator is disposed between the positive electrode and the negative electrode and is configured to act as a barrier between the positive electrode and the negative electrode. In some implementations, the electrolyte is disposed in the electrochemical device and configured to allow ions to pass between the positive electrode and the negative electrode.

In some implementations, the separator does not include a polyolefin-based film or a hydrophobic polymer film.

In an example embodiment, the electrolyte may further include a lithium salt. When the electrolyte further includes the lithium salt, a weight ratio between the nitrile-based compound and the lithium salt may be 1:10 to 10:1.

In an example embodiment, the nitrile-based compound may include succinonitrile, (3,4-dimethoxyphenyl) acetonitrile, 2-(4-bromo-2-methoxyphenyl)acetonitrile, 2-fluorophenylacetonitrile, 2-chloro-4-fluorophenylacetonitrile, 4-fluorophenylacetonitrile, glutaronitrile, adiponitrile, pimelonitrile, suberonitrile, nonanedinitrile, sebaconitrile, undedecanedinitrile, and/or dodecandinitrile.

In an example embodiment, the lithium salt may include lithium bis(trifluoromethanesulfonyl)imide (LiTFSI), lithium bis(fluorosulfonyl)imide (LiFSI), lithium bis(oxalato)borate (LiBOB), $(C_2F_5SO_2)_2NLi$, LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiC$_4$BOs, LiAsF$_6$, LiSbF$_6$, LiAlCl$_4$, CH$_3$SO$_3$Li, $(CF_3SO_2)_3$CLi, LiBF$_2$(C$_2$O$_4$), LiAlO$_2$, and/or LiN(C$_x$F$_{2x+1}$SO$_2$)(C$_y$F$_{2y+1}$SO$_2$) (wherein x and y are natural numbers).

In an example embodiment, the electrolyte includes, or consists of, succinonitrile as the nitrile-based compound, and a lithium salt which are mixed with each other, optionally with an additive.

In an example embodiment, the inorganic particles may be hydrophilic inorganic particles, for example, a glass material, Al$_2$O$_3$, boehmite (AlOOH), SiO$_2$, SnO$_2$, ZrO$_2$, TiO$_2$, SiC, Si$_3$N$_4$, CaO, MgO, ZnO, BaTiO$_3$, LiAlO$_2$, BaSO$_4$, CaCO$_3$, Y$_2$O$_3$, and/or CeO$_2$.

In an example embodiment, the inorganic particles may have an average particle size of 1 nm to 100 $\mu$m.

In an example embodiment, the inorganic fibers may include a glass material, Al$_2$O$_3$, boehmite (AlOOH), SiO$_2$, SnO$_2$, ZrO$_2$, TiO$_2$, SiC, Si$_3$N$_4$, CaO, MgO, ZnO, BaTiO$_3$, LiAlO$_2$, BaSO$_4$, CaCO$_3$, Y$_2$O$_3$, and/or CeO$_2$.

In an example embodiment, the inorganic fibers may have an average length of 50 nm to 1 mm, and/or the inorganic fibers may have an average diameter of 1 nm to 5 $\mu$m.

In an example embodiment, a polymer binder may be present, and the polymer binder may include a fluorine-based polymer binder, and the fluorine-based polymer may include, for example, one or more of polyvinylidene fluoride (PVDF), polyvinylidene fluoride-co-hexafluoropropylene (PVDF-co-HFP), or polytetrafluoroethylene (PTFE) .

In an example embodiment, the electrolyte may be present in, or may adopt, a liquid phase or a gel phase at room temperature. When the liquid phase or gel phase electrolyte is placed in a quartz cell of $10\times40\times50$ mm and allowed to stand at room temperature for 12 hours, and then a haze is measured using a calorimeter (e.g., COH400, Nippon denshoku Co., Ltd.) with the electrolyte being spaced 100 mm vertically from a halogen lamp under the conditions of a rated voltage of 12 V and a power consumption of 50 W, the liquid phase may have the haze of 50% or less and the gel phase may have the haze of more than 50% and less than 90%.

In an example embodiment, at least a part of the electrolyte may be disposed within pores of the separator. In one example, at least a part of the electrolyte may fill the pores of the separator. This is beneficial, since the separator is sufficiently wettable in the electrolyte.

In an example embodiment, the electrolyte may include a carbonate-based additive of 0.1 wt% to 10 wt% with respect to the total weight of the electrolyte.

In an example embodiment, the separator may have a thickness of 1 $\mu$m to 100 $\mu$m.

In example embodiments, the electrolyte may be formed of only the nitrile-based compound, or of only the nitrile-based compound and the lithium salt, or of only the nitrile-based compound, the lithium salt and optionally the carbonate-based additive.

In an example embodiment, the separator does not make use of a polyolefin-based film, or another hydrophobic polymer film.

In an example embodiment, a contact angle of the separator to the electrolyte may be 5° to 50°. In an example embodiment, the separator may have an ionic conductivity of $0.1\times10^{-4}$ S/cm or more at 25 °C. In some embodiments, the term "contact angle" may refer to the angle between a liquid surface and a solid surface where they meet. In an example embodiment, the separator may have a porosity is 20% to 70%.

In an example embodiment, the electrochemical device may be a lithium secondary battery.

In a further aspect, the present disclosure provides a use of a combination of a film or a separator and an electrolyte, wherein the film or the separator includes a porous film or separator that includes: inorganic fibers or inorganic particles, and optionally a polymer binder; and wherein the electrolyte includes a nitrile-based compound. The combined use provides the film or separator with wettability towards the electrolyte including the nitrile-based compound. In a further example embodiment, the combined use provides effects of wettability - improved compared to a film or separator including a hydrophobic polymer film such as a polyolefin-based film - of the film or separator which includes the inorganic fibers or the inorganic particles and the optional polymer binder, towards the electrolyte including the nitrile-based compound, while simultaneously providing effective performance of thermal stability, nonflammability and fire stability associated with the nitrile-based compound. In further example embodiments, the combination makes use of the porous separator and the electrolyte as described above and as disclosed herein.

In example embodiments, the electrochemical device described above, or the aforementioned combined use of the film or the separator and the electrolyte, respectively may be used in methods to manufacture electric vehicles, uninterruptible power supplies, battery storage power stations, solar panels, and/or wind power generators.

Other features and aspects will be apparent from the following detailed description, the drawings, and the claims.

**BRIEF DESCRIPTION OF THE DRAWINGS**

FIG. 1 is a schematic plan view of a lithium secondary battery based on an example embodiment.
FIG. 2 is a schematic cross-sectional view of the lithium secondary battery based on an example embodiment.

**DETAILED DESCRIPTION**

Section headings are used in the present document only for ease of understanding and do not limit scope of the embodiments to the section in which they are described.

Some embodiments described in this patent document may be modified in various forms, and the disclosed technology is not limited to specific embodiments. In some embodiments, terms such as "comprising," "including," "containing," "being provided with," or "having" do not exclude the presence of other elements. In some embodiments, these terms mean the inclusion of additional elements, and elements, materials, or processes not explicitly mentioned.

In some embodiments, the numerical range encompasses all values within the specified range, including the lower limit, the upper limit, and all increments logically derived within the range. In some embodiments, the numerical range also includes all possible combinations of double-limited values and all combinations of the upper limit and the lower limit in the numerical range defined in different forms. As an example, if the content of a composition is defined as 10% to 80% or 20% to 50%, the numerical ranges of 10% to 50% or 50% to 80% can also be considered as being disclosed. In some embodiments, values that "may fall outside a defined numerical range due to experimental error or rounding are also included in the defined numerical range.

In some embodiments, the term "about" may be used to encompass a range within 30%, 25%, 20%, 15%, 10%, 5%, 3%, 2%, 1%, or 0.5% of the specified value.

In some embodiments, the diameter of particles (or particle diameter or particle size) may refer to an average diameter. In some embodiments, the diameter may be determined through conversion based on measurements obtained using a scanning electron microscope (SEM). The diameter and the length of the fiber may refer to an average diameter and an average length, which may be determined by observing a scanning electron microscope (SEM).

In some embodiments, when a part such as a layer, a film, a thin film, a region, or a plate is described as being "on" or "above" another part, the part may be "directly on" the other part, or there can be an additional part interposed between the part and the other part.

In some embodiments, the term "polymer (high molecule)" refers to a molecule with a relatively high molecular weight, and its structure may include multiple repeating units derived from low molecular weight molecules. In some embodiments, the term "polymer" may be used to indicate an alternating copolymer, a block copolymer, a random copolymer, a graft copolymer, a gradient copolymer, a branched copolymer, a crosslinked copolymer, or a copolymer including all of them (e.g., a polymer including more than one monomer). In some embodiments, the term "polymer" may be used to indicate a homopolymer (e.g., a polymer including one monomer).

In some embodiments, the term "Aspect ratio" means the long axis of a fiber or particle divided by the short axis of the fiber or particle.

The term "Long axis" means the length in the longest direction of a fiber or particle.

The term "Short axis" means the length in the shortest direction of a fiber or particle.

In a fiber, the short axis may refer to the diameter and the long axis may refer to the length.

In some embodiments, the term "Fiber" means a material having an aspect ratio of 5 or more.

In some embodiments, the term "Particle" means a material having an aspect ratio of less than 5.

The wettability of the separator with an electrolyte plays a very important role to maintain the electrochemical properties of the device, while implementing a high-capacity and high-output electrode active material.

In an embodiment, an electrochemical device may include a separator that exhibits sufficient wettability to an electrolyte including a nitrile-based compound. Specifically, the disclosed technology can be implemented in some embodiments to provide an electrochemical device including a positive electrode, a negative electrode, a separator, and an electrolyte, wherein the separator is a porous separator including inorganic fibers or including inorganic particles and a polymer binder, and the electrolyte includes a nitrile-based compound.

The separator based on an implementation of the disclosed technology has sufficient wettability to the electrolyte. In some implementations of the disclosed technology, the separator may exhibit significantly high wettability as compared with a hydrophobic polymer separator that does not include inorganic fibers or inorganic particles. In addition, the separator based on an implementation of the disclosed technology may exhibit significantly high ionic conductivity compared to a separator formed by coating a hydrophobic polymer separator with inorganic particles as well as the hydrophobic polymer separator.

In an example embodiment, the inorganic particles may be hydrophilic inorganic particles. The (hydrophilic) inorganic particles are not particularly limited to specific hydrophilic inorganic particles. For example, the hydrophilic inorganic particle may include one or more of a glass material, $Al_2O_3$, boehmite (AlOOH), $SiO_2$, $SnO_2$, $ZrO_2$, $TiO_2$, SiC, $Si_3N_4$, CaO, MgO, ZnO, $BaTiO_3$, $LiAlO_2$, $BaSO_4$, $CaCO_3$, $Y_2O_3$, and/or $CeO_2$.

In an example embodiment, the hydrophilic inorganic particles may have an average particle size of, for example, 1 nm to 100 $\mu$m, 10 nm to 10 $\mu$m, 100 nm to 1 $\mu$m, 100 nm to 500 nm, or 200 nm to 400 nm.

In an example embodiment, the inorganic fibers are not particularly limited to specific inorganic fibers. For example, the inorganic fibers may include any one or more of a glass material, $Al_2O_3$, boehmite (AlOOH), $SiO_2$, $SnO_2$, $ZrO_2$, $TiO_2$, SiC, $Si_3N_4$, CaO, MgO, ZnO, $BaTiO_3$, $LiAlO_2$, $BaSO_4$, $CaCO_3$, $Y_2O_3$, and/or $CeO_2$.

In an example embodiment, the inorganic fibers may have an average length of 50 nm to 1 mm, 0.5 $\mu$m to 1 mm, 1 $\mu$m to 1 mm, 1 $\mu$m to 100 $\mu$m, or 1 $\mu$m to 10 $\mu$m, and/or and may have an average diameter of 1 nm to 5 $\mu$m, 1 nm to 1 $\mu$m, 1 nm to 100 nm, or 1 nm to 10 nm. However, the ranges of the average length and the average diameter of the inorganic fibers represent only an example, and the disclosed technology is not limited to the ranges.

In an example embodiment, the polymer binder, when present, is not particularly limited to a specific polymer binder. Specifically, the polymer binder based on an example embodiment may include a fluorine-based polymer binder (that is, a polymer binder including a fluorine atom). The fluorine-based polymer may be, for example, any one or more of polyvinylidene fluoride (PVDF), polyvinylidene fluoride-co-hexafluoropropylene (PVDF-co-HFP), or polytetrafluoroethylene (PTFE).

In an example embodiment, the nitrile-based compound included in the electrolyte is not particularly limited as long as it is a compound including one or more nitrile groups (-CN). For example, the nitrile-based compound may include any one or more of succinonitrile (SN), (3,4-dimethoxyphenyl)acetonitrile, 2-(4-bromo-2-methoxyphenyl)acetonitrile, 2-fluorophenylacetonitrile, 2-chloro-4-fluorophenylacetonitrile, 4-fluorophenylacetonitrile, glutaronitrile, adiponitrile, pimelonitrile, suberonitrile, nonanedinitrile, sebaconitrile, undedecanedinitrile, and/or dodecandinitrile.

In an example embodiment, the electrolyte may further include a lithium salt. The lithium salt is an ionizable lithium salt and is not particularly limited to a specific lithium salt. For example, the lithium salt may include any one or more of lithium bis(trifluoromethanesulfonyl)imide (LLiTFSI, $(CF_3SO_2)_2NLi$), lithium bis (fluorosulfonyl) imide (LiFSI, $(SO_2F)_2N$-Li), lithium bis(oxalato)borate (LiBOB, LiB $(C_2O_4)_2$), $(C_2F_5SO_2)_2NLi$, LiCl, LiBr, LiI, $LiClO_4$, $LiBF_4$, $LiB_{10}Cl_{10}$, $LiPF_6$, $LiCF_3SO_3$, $LiCF_3CO_2$, $LiC_4BO_8$, $LiAsF_6$, $LiSbF_6$, $LiAlCl_4$, $CH_3SO_3Li$, $(CF_3SO_2)_3CLi$, $LiBF_2(C_2O_4)$, $LiAlO_2$, and/or LiN $(C_xF_{2x+1}SO_2)(C_yF_{2y+1}SO_2)$ (x and y are natural numbers). In an example embodiment, the electrolyte may form a robust and thin SEI film on a negative electrode by including an imide-based lithium salt such as LiFSI.

In an example embodiment, the electrolyte may not include an additional solvent, and in this case, may be formed of only a nitrile-based compound, only a nitrile-based compound and a lithium salt, or only a nitrile-based compound, a lithium salt, and a predetermined additive.

In an example embodiment, the electrolyte may include a nitrile-based compound, which for mixing with other components is suitably melted at a temperature of 40°C to 80°C, 50°C to 80°C, 50°C to 70°C, or 60°C to 80°C, and a lithium salt, and may further include a predetermined additive. Otherwise, the electrolyte may be formed by further including the molten nitrile-based compound and any one or more of the lithium salt and an additive without an additional solvent or compound.

In an example embodiment, when the electrolyte further includes the lithium salt, a weight ratio between the nitrile-based compound and the lithium salt may be 1:10 to 10:1, 2:8 to 8:2, 4:6 to 6:4, or about 3:1. However, the weight range is only an example, and the disclosed technology is not necessarily limited to the range.

In an example embodiment, the electrolyte may further include a carbonate-based additive. The carbonate-based additive may improve the coatability of the electrolyte, and may also promote the more effective formation of a solid electrolyte interphase (SEI). The carbonate-based additive based on an example embodiment may be used at a smaller content than the content used as a solvent of a common liquid electrolyte. For example, it may be included at 0.1 wt% to 10 wt%, or, for example, 10 wt% or less, 8 wt% or less, 5 wt% or less, or 3 wt% or less, based on the total weight of the electrolyte, and the lower limit may be 0.1 wt% or more, 0.5 wt% or more, or 1.0 wt% or more.

The carbonate-based additive may include any one or more of fluoroethylene carbonate (FEC), vinylene carbonate (VC), vinyl enthylene carbonate (VEC), ethylene carbonate (EC), propylene carbonate (PC), and/or di-fluoroethylene carbonate (DiFEC).

In addition, the electrolyte may further include an additive other than an optional carbonated-based additive, and its content may be 5 wt% or less with respect to the total weight of the electrolyte, but the content is not limited as long as the effect of the disclosed technology is achieved. Since the additive is not particularly limited as long as it is a known additive that may be included in the electrolyte, further description will be omitted herein.

The electrolyte based on an example embodiment may be a liquid phase or a gel phase at room temperature.

Herein, the liquid phase or the gel phase may be visually evaluated or measured as follows. When the electrolyte is placed in a quartz cell of $10 \times 40 \times 50$ mm and allowed to stand at room temperature for 12 hours, and then a haze is measured using a calorimeter (e.g., COH400, Nippon denshoku Co., Ltd.) with the electrolyte being spaced 100 mm vertically from a halogen lamp under the conditions of a rated voltage of 12 V and a power consumption of 50 W, the liquid phase means having the haze of 50% or less and the gel phase means having the haze of more than 50% and less than 90%.

The electrolyte based on an example embodiment may be present between the electrode and the separator as the liquid phase or the gel phase, and at least a part of the electrolyte may be present in the form of filling pores of the porous separator.

In an example embodiment, the electrolyte may be a liquid phase or gel phase electrolyte, or may be obtained by heating two or more solid phase functional layers to a predetermined temperature or higher and mixing them with each other, resulting in phase transformation into a liquid phase or a gel phase at room temperature. Specifically, a first functional layer (solid phase) including a nitrile-based compound and a second functional layer (solid phase) including a nitrile-based compound are applied on both surfaces of the separator and/or disposed within the pores of the separator (e.g., filling the pores of the separator), respectively, and then mixed with each other by heating to a predetermined temperature or higher.

In some embodiments, since the first functional layer and the second functional layer may further include a lithium salt in addition to the nitrile-based compound, the carbonate-based additive may be optionally further included.

In an example embodiment, the functional layer may be formed within a range of 50% or more, 60% or more, 70% or more, 80% or more, 85% or more, 90% or more, 95% or more, or about 100% with respect to the total surface area of the separator. In addition, it may have an area between the numerical values, and for example, may be formed with an area of 80% to 100% with respect to the total surface area of the separator. However, since the range is only an example, the disclosed technology is not necessarily limited to the range.

In an example embodiment, the functional layer is a solid phase at room temperature, for example, at 20°C to 35°C, but when being heated to 40°C or higher, 50°C or higher, or 60°C or higher, the solid phase functional layers are melted and mixed with each other to change the composition of components of each layer, so that it maintains the liquid phase or gel phase as it is without transforming into a solid phase even at room temperature which is a low temperature. In some implementations, the heating temperature is not limited as long as the coating layers coated on both surfaces are melted and mixed with each other at the temperature without affecting the pores of the separator based on an example embodiment, and, for example, may be 40°C to 80°C, 50°C to 80°C, 50°C to 70°C, or 60°C to 80°C.

Among various examples of the nitrile-based compound described above, succinonitrile (SN), (3,4-dimethoxyphenyl)acetonitrile, 2-(4-bromo-2-methoxyphenyl)acetonitrile, 2-fluorophenylacetonitrile, 2-chloro-4-fluorophenylacetonitrile, and 4-fluorophenylacetonitrile are compounds which have a melting point of 40°C or higher and are present as a solid at room temperature, and glutaronitrile, adiponitrile, pimelonitrile, suberonitrile, nonanedinitrile, sebaconitrile, undedecanedinitrile, and dodecandinitrile are compounds which may be present as a solid at room temperature when mixed with a lithium salt.

The nitrile-based compound may be 50 wt% or more, 55 wt% or more, 60 wt% or more, 65 wt% or more, 70 wt% or more, 75 wt% or more, 80 wt% or more, 85 wt% or more, 90 wt% or more and 99.9 wt% or less, 95 wt% or less, 90 wt% or less, based on the total weight of the electrolyte, or any value between the numerical values described above. For example, it may be 50 wt% to 99.9 wt%, 55 wt% to 99.9 wt%, 60 wt% to 90 wt%.

In an example embodiment, when the electrolyte further includes the lithium salt, the lithium salt is mixed with the nitrile-based compound and is present as a solid phase at 10°C to 35°C, but when the separator is heated and each functional layer is melted and mixed with each other, the content of the lithium salt is not limited as long as the lithium salt does not maintain a solid state at room temperature (e.g., 10°C to 35°C) anymore and is present as a liquid phase or gel phase.

As an embodiment, for example, the content of the lithium salt may be less than 50 wt%, 49 wt% or less, 45 wt% or less, 40 wt% or less, 35 wt% or less, 30 wt% or less, 25 wt% or less, 20 wt% or less, 15 wt% or less and 10 wt% or more, based on the total weight of the electrolyte, or any value between the numerical values described above. For example, it may be 10 wt% to 49 wt% or 10 wt% to 45 wt%.

In an example embodiment, a first functional layer is formed of the nitrile-based compound alone, and a second functional layer may be a mixture of the nitrile-based compound and the lithium salt at a weight ratio of 1:1 to 1.5:1 or about 10:1. In an example embodiment, the total weight of the first functional layer and the second functional layer may be adjusted so that the total weight of the nitrile-based compound included in the functional layer may be 2 to 7 times that of the lithium salt. Each functional layer maintains a solid phase by adjustment to the above range, which may facilitate transport.

In an example embodiment, the first functional layer may be formed by being impregnated in a part or all of the surface of the porous substrate and the pores inside, and for example, may be formed at 0.5 g/m$^2$ to 10 g/m$^2$. The second functional layer may be formed by being impregnated in a part or all of the surface of the porous substrate and the pores inside, and for example, may be formed at 0.5 g/m$^2$ to 10 g/m$^2$. In some implementations, the coating amounts of the first functional layer and the second functional layer may be the same as or different from each other.

In an example embodiment, succinonitrile and the lithium salt are mixed with each other and phase transformed from a solid phase into a liquid phase or a gel phase, and simultaneously, since succinonitrile has a transisomer (trans-gauche isomerism) to a center C-C bond at a melting point or lower, it has ion conduction behavior. Therefore, it may act as an electrolyte. Herein, the transisomer contributes to lattice defect worsening and activation energy lowering for ionic conductivity, thereby increasing ion mobility. Therefore, the electrolyte based on an example embodiment may provide a broader electrochemical window than a conventional liquid electrolyte including an organic solvent and an ionic liquid.

The electrolyte based on an example embodiment may be formed of only the nitrile-based compound, of only the nitrile-based compound and the lithium salt, or of only the nitrile-based compound, the lithium salt, or the carbonyl-based additive.

In the case of the liquid phase or gel phase electrolyte, a porous support should be used. However, wet or dry separators made from commonly used polyolefin-based polymers face challenges in maintaining consistent wettability with the electrolyte due to various factors such as porosity, pore size, or polarity of the porous support. These chemical and/or physical factors may reduce electrolyte uptake, resulting in deterioration of battery performance. To address this issue, the disclosed technology can be implemented in some embodiments to provide a porous separator including inorganic fibers, or inorganic particles and a polymer binder to exhibit sufficient wettability with the electrolyte including the nitrile-based compound. In this way, the porous separator can enhance battery life and performance while simultaneously providing the fire stability effect of the nitrile-based compound.

In an example embodiment, the separator may have a thickness of 1 μm to 500 μm, 1 μm to 300 μm, 10 μm to 300 μm, 100 μm to 300 μm, 150 μm to 300 μm, 10 μm to 50 μm, 10 μm to 30 μm, 1 μm to 200 μm, 1 μm to 100 μm, or 1 μm to 50 μm. However, the disclosed technology is not limited to the thickness ranges above.

A contact angle of the separator based on an example embodiment to the electrolyte may be 5° to 50°, 5° to 20°, 10° to 15°, 5° to 15°, 8° to 12°, or 9° to 11°. The contact angle is measured 10 seconds after 3 μL of an electrolyte is dropped onto a separator using drop shape analyzer equipment (Mobile Surface Analyzer, Kruss GmbH, Germany), and may be a value measured under a dry room environment of a temperature of 24°C and a relative humidity of 0.5 RH% or less.

The separator based on an example embodiment may have an ionic conductivity of $0.1 \times 10^{-4}$ S/cm or more, $1.0 \times 10^{-4}$ S/cm or more, $3.0 \times 10^{-4}$ S/cm or more, $5.0 \times 10^{-4}$ S/cm or more, $6.0 \times 10^{-4}$ S/cm or more, $7.0 \times 10^{-4}$ S/cm or more, $8.0 \times 10^{-4}$ S/cm or more or $8.4 \times 10^{-4}$ S/cm or more. Herein, the upper limit may be 0.01 S/cm or less, 0.005 S/cm or less, 0.003 S/cm or less, 0.001 S/cm or less, or $9.0 \times 10^{-4}$ S/cm or less.

The separator based on an example embodiment may have a porosity of 20% to 70%, 30% to 70%, 30% to 65%, 35% to 65%, 30% to 55%, or 50% to 70%. The porosity may be measured using the following equation:

$$\text{Porosity} = [1 - \{(W/T) \div \rho\}] \times 100,$$

W = weight of separator per unit area (g/m$^2$),

T = sample thickness (m),

$\rho$ = true density (g/m$^3$) of entire separator calculated from each material of resin and/or inorganic layer with binder.

In an example embodiment, the electrochemical device may be a lithium secondary battery. Herein, the lithium secondary battery may be formed of a polygonal, cylindrical, or pouch shape.

In an example embodiment, the lithium secondary battery may be, for example, a lithium metal secondary battery, a lithium ion secondary battery, a lithium polymer secondary battery, or a lithium ion polymer secondary battery.

A positive electrode included in the lithium secondary battery based on an example embodiment includes a positive electrode active material capable of absorbing and desorbing lithium ions, and as the positive electrode active material, at least one selected from cobalt, manganese, and nickel and a composite metal oxide with lithium may be used. An employment ratio between metals may be various, and in addition to these metals, an element selected from Mg, Al, Co, K, Na, Ca, Si, Ti, Sn, V, Ge, Ga, B, As, Zr, Mn, Cr, Fe, Sr, V and rare earth elements may be further included. As a specific example of the positive electrode active material, a compound represented by one of the following Chemical Formulae may be used:

$\text{LI}_a\text{A}_{1-b}\text{B}_b\text{D}_2$ (wherein $0.90 \leq a \leq 1.8$ and $0 \leq b \leq 0.51$); $\text{Li}_a\text{E}_{1-b}\text{B}_b\text{O}_{2-c}\text{D}_c$ (wherein $0.90 \leq a \leq 1.8$, $0 \leq b \leq 0.5$, and $0 \leq c \leq 0.05$); $\text{LiE}_{2-b}\text{B}_b\text{O}_{4-c}\text{D}_c$ (wherein $0 \leq b \leq 0.5$ and $0 \leq c \leq 0.05$); $\text{Li}_a\text{Ni}_{1-b-c}\text{Co}_b\text{B}_c\text{D}_\alpha$ (wherein $0.90 \leq a \leq 1.8$, $0 \leq b \leq 0.5$, $0 \leq c \leq 0.05$, and $0 < \alpha \leq 2$); $\text{Li}_a\text{Ni}_{1-b-c}\text{Co}_b\text{B}_c\text{O}_{2-\alpha}\text{F}_\alpha$ (wherein $0.90 \leq a \leq 1.8$, $0 \leq b \leq 0.5$, $0 \leq c \leq 0.05$, and $0 < \alpha < 2$); $\text{Li}_a\text{Ni}_{1-b-c}\text{Co}_b\text{B}_c\text{O}_{2-\alpha}\text{F}_2$ (wherein $0.90 \leq a \leq 1.8$, $0 \leq b \leq 0.5$, $0 \leq c \leq 0.05$, and $0 < \alpha < 2$); $\text{Li}_a\text{Ni}_{1-b-c}\text{Mn}_b\text{B}_c\text{D}_\alpha$ (wherein $0.90 \leq a \leq 1.8$, $0 \leq b \leq 0.5$, $0 \leq c \leq 0.05$, and $0 < \alpha \leq 2$); $\text{Li}_a\text{Ni}_{1-b-c}\text{Mn}_b\text{B}_c\text{O}_{2-\alpha}\text{F}_\alpha$ (wherein $0.90 \leq a \leq 1.8$, $0 \leq b \leq 0.5$, $0 \leq c \leq 0.05$, and $0 < \alpha < 2$); $\text{Li}_a\text{Ni}_{1-b-c}\text{Mn}_b\text{B}_c\text{O}_{2-\alpha}\text{F}_2$ (wherein $0.90 \leq a \leq 1.8$, $0 \leq b \leq 0.5$, $0 \leq c \leq 0.05$, and $0 < \alpha < 2$); $\text{Li}_a\text{Ni}_b\text{E}_c\text{G}_d\text{O}_2$ (wherein $0.90 \leq a \leq 1.8$, $0 \leq b \leq 0.9$, $0 \leq c \leq 0.5$, and $0.001 \leq d \leq 0.1$); $\text{Li}_a\text{Ni}_b\text{Co}_c\text{Mn}_d\text{GeO}_2$ (wherein $0.90 \leq a \leq 1.8$, $0 \leq b \leq 0.9$, $0 \leq c \leq 0.5$, $0 \leq d \leq 0.5$, and $0.001 \leq e \leq 0.1$); $\text{Li}_a\text{NiG}_b\text{O}_2$ (wherein $0.90 \leq a \leq 1.8$ and $0.001 \leq b \leq 0.1$); $\text{Li}_a\text{CoG}_b\text{O}_2$ (wherein $0.90 \leq a \leq 1.8$ and $0.001 \leq b \leq 0.1$); $\text{Li}_a\text{MnG}_b\text{O}_2$ (wherein $0.90 \leq a \leq 1.8$ and $0.001 \leq b \leq 0.1$); $\text{Li}_a\text{Mn}_2\text{G}_b\text{O}_4$ (wherein $0.90 \leq a \leq 1.8$ and $0.001 \leq b \leq 0.1$); $\text{QO}_2$; $\text{QS}_2$; $\text{LiQS}_2$; $\text{V}_2\text{O}_5$; $\text{LiV}_2\text{O}_5$; $\text{LiIO}_2$; $\text{LiNiVO}_4$; $\text{Li}_{(3-f)}\text{J}_2(\text{PO}_4)_3$ $(0 \leq f \leq 2)$; $\text{Li}_{(3-f)}\text{Fe}_2(\text{PO}_4)_3$ $(0 \leq f \leq 2)$; and $\text{LiFePO}_4$.

In the above Chemical Formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The negative electrode includes a negative electrode active material capable of absorbing and desorbing lithium ions, and as the negative electrode active material, carbon materials such as crystalline carbon, amorphous carbon, a carbon composite, and carbon fiber, a lithium metal, an alloy of lithium with other elements, and similar materials or a combination thereof may be used. For example, the amorphous carbon may be hard carbon, coke, mesocarbon microbead (MCMB) fired at 1500°C or lower, mesophase pitch-based carbon fiber (MPCF), or similar materials, or other amorphous carbon in which lithium ion can be intercalated. The crystalline carbon includes graphite-based materials, specifically natural graphite, graphitized cokes, graphitized MCMB, graphitized MPCF, and other crystalline carbon. The carbon-based material may have an interplanar distance of 3.35 Å to 3.38 Å, and a crystalline size (Lc) by X-ray diffraction of at least 20 nm or more. As other elements forming the alloy with lithium, aluminum, zinc, bismuth, cadmium, antimony, silicon, lead, tin, gallium, or indium may be used.

The positive electrode or the negative electrode may be manufactured by dispersing an electrode active material, a binder, a conductive material, and if necessary, a thickener in a solvent to prepare an electrode slurry composition, and applying the slurry composition on an electrode current collector. As a positive electrode current collector, aluminum, an aluminum alloy, or other possible metal sheet materials may be often used, and as a negative electrode current collector, copper, a copper alloy, or other possible metal sheet materials may be often used. The positive electrode current collector and the negative electrode current collector may be in the form of foil or mesh.

In an example embodiment, the binder is a material acting to perform pasting of the active material, mutual adhesion of the active material, adhesion to a current collector, a buffering effect to expansion and shrinkage of the active material, and other suitable functions of the binder in the electrode, and, for example, polyvinylidene fluoride (PVdF), a copolymer of polyhexafluoropropylene-polyvinylidene fluoride (PVdF/HFP), poly(vinyl acetate), polyvinyl alcohol, polyethylene oxide, polyvinyl pyrrolidone, alkylated polyethylene oxide, polyvinyl ether, poly(methyl methacrylate), poly(ethyl acrylate), polytetrafluoroethylene, polyvinyl chloride, polyacrylonitrile, polyvinyl pyridine, a styrene butadiene rubber, an acrylonitrile-butadiene rubber, and other binder materials may be used. The content of the binder may be 0.1 wt% to 30 wt% or 1 wt% to 10 wt% with respect to the electrode active material. When the content of the binder is too low, the adhesive strength between the electrode active material and the current collector is insufficient, and when the content of the binder is too high, the adhesive strength is better, but the content of the electrode active material is decreased by the increased amount of the binder, and thus, it may be unfavorable for increasing a battery capacity.

In an example embodiment, the conductive material is used for imparting conductivity to an electrode, and any material may be used as long as it is an electron conductive material without causing a chemical change, and may be one or more of a graphite-based conductive material, a carbon black-based conductive material, a metal, or metal compound-based conductive material. An example of the graphite-based conductive material includes artificial graphite, natural graphite, or a combination thereof, an example of the carbon black-based conductive material includes acetylene black, ketjen black, denka black, thermal black, channel black, or a combination thereof, and an example of the metal-based or metal compound-based conductive material includes a perovskite material such as tin, tin oxide, tin phosphate ($SnPO_4$), titanium oxide, potassium titanate, $LaSrCoO_3$, $LaSrMnO_3$ or a combination thereof. However, the disclosed technology is not limited to the conductive materials listed above. The content of the conductive material may be 0.1 wt% to 10 wt% with respect to the electrode active material.

The thickener is not particularly limited as long as it may serve to control the viscosity of an active material slurry, and for example, may be carboxymethyl cellulose, hydroxymethyl cellulose, hydroxyethyl cellulose, hydroxypropyl cellulose, or a combination thereof.

As a solvent in which the electrode active material, the binder, the conductive material, and other additives are dispersed, a non-aqueous solvent or an aqueous solvent may be used. The non-aqueous solvent may include, for example, N-methyl-2-pyrrolidone (NMP), dimethyl formamide, dimethyl acetamide, N,N-dimethylaminopropylamine, ethylene oxide, tetrahydrofuran, and a combination thereof.

In a further aspect, the combination of a film or a separator and an electrolyte, wherein the film or separator includes the porous film or separator that includes: inorganic fibers or inorganic particles and optionally a polymer binder; and wherein the electrolyte includes the nitrile-based compound, may be used for the purpose of exhibiting the film or the separator with wettability towards the electrolyte including the nitrile-based compound. The wettability may be improved compared to a film or separator that conventionally includes a hydrophobic polymer film such as a polyolefin film or porous separator made thereof. In addition to wettability, an effective performance of thermal stability, nonflammability and/or fire stability, which is associated with the nitrile-based compound, may be simultaneously provided.

In an example embodiment, the electrochemical device may be used in electric vehicles, uninterruptible power supplies, battery storage power stations, and others including battery power storage for solar panels, wind power generators and other green tech power generators.

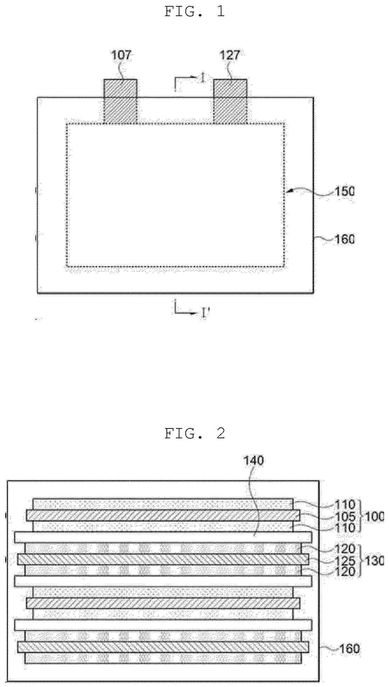

FIGS. 1 and 2 are a schematic plan view and a cross-sectional view showing the lithium secondary batteries based on some example embodiments, respectively. For example, FIG. 2 is a cross-sectional view taken along the line I-I' of FIG. 1.

Referring to FIGS. 1 and 2, the lithium secondary battery may include an electrode assembly 150 including a positive electrode 100, a negative electrode 130, and a separator 140 interposed between the positive electrode and the negative electrode. The electrode assembly 150 may be housed with an electrolyte and impregnated in a case 160.

The positive electrode 100 may include a positive electrode current collector 105 and a positive electrode active material layer 110 on the positive electrode current collector 105. The positive electrode active material layer 110 may include a positive electrode active material, and, if necessary, a positive electrode binder, a conductive material, and/or a dispersion medium. The positive electrode 100 may be manufactured by, for example, mixing and stirring a positive electrode active material, a positive electrode binder, a conductive material, a dispersion medium, and optionally other additives to prepare a positive electrode slurry, and applying (coating) the slurry on the positive electrode current collector 105, drying, and rolling (compressing) .

The negative electrode 130 may include a negative electrode current collector 125 and a negative electrode active material layer 120 on the positive electrode current collector 125. The negative electrode active material layer 120 may include a negative electrode active material, and, if necessary, a negative electrode binder, a conductive material, and/or a dispersion medium. The negative electrode 130 may be manufactured by for example, mixing and stirring a negative electrode active material, a negative electrode binder, a conductive material, a dispersion medium, and optionally other additives to prepare a negative electrode slurry, and applying (coating), drying, and rolling (compressing) the slurry on the negative electrode collector 125.

Electrode tabs (positive electrode tab and negative electrode tab) may protrude from the positive electrode current collector 105 and the negative electrode current collector 125 belonging to each electrode cell, respectively, and be extended to one side portion of the case 160. The electrode tabs may be fused with the one side portion of the case 160 to form electrode leads (positive electrode lead 107 and negative electrode lead 127) which are extended or exposed to the outside of the case 160.

Hereinafter, the examples and the experimental examples will be illustrated specifically in detail in the following. However, since the examples and the experimental examples described later only illustrate a part of one embodiment, the technology described in the present specification should not be construed as being limited thereto.

**<Test method>**

**1. Analysis of physical properties of separator**

The thickness of the separator was calculated as an average value obtained by measuring the thickness of a 10-layer separator using a contact type micrometer (Mitutoyo, Japan) and then dividing the value by 10.

The weight per area of the separator was obtained by measuring the weight of an area of 10 cm×10 cm using an electronic scale capable of measuring up to 4 decimal places and then converting the value into unit area.

The porosity of the separator was calculated using the following equation based on the thickness and the weight per area of the separator measured above:

$$\text{Porosity} = [1-\{(W/T) \div \rho\}] \times 100$$

(W = weight of separator per unit area (unit: $g/m^2$) , T = sample thickness (unit: m), and $\rho$ = true density of entire separator calculated from each material of resin and coating layer (unit: $g/m^3$)).

**2. Analysis of contact angle**

The liquid electrolyte contact angles of the separators manufactured in the examples and the comparative examples were measured using drop shape analyzer equipment (Mobile Surface Analyzer, Kruss, Germany), immediately after manufacture of the separators. The contact angle was measured 10 seconds after dropping 3 $\mu$L of the liquid electrolyte prepared by the example 1 below onto the separator, and the measurement was performed in a dry room environment of a temperature of 24°C and a relative humidity of 0.5 RH% or less.

**3. Analysis of spreading rate**

10 mg of drops of the liquid electrolyte prepared by the example 1 below were dropped onto a separator having an area of 10 cm×10 cm using a pipette, and then the longest part of the radius of the electrolyte spreading in a circular shape was measured after 10 seconds.

**4. Analysis of ionic conductivity**

The ionic conductivity of the separators of each example and comparative example was calculated from the following equation:

$$\text{Ionic conductivity} = L \div (R \times A)$$

(L = thickness of separator impregnated with the liquid electrolyte prepared by the example 1 below (unit: cm), R = impedance value of separator impregnated with liquid electrolyte (unit: $\Omega$ = 1/S) (real part value when impedance imaginary part value is 0), and A = overlapping area between two stainless steel(SUS) electrodes when measuring impedance (unit: $cm^2$)).

For determining the R value, the separator was punched out to make a concentric circle having a diameter of 18 mm and then impregnated with a liquid electrolyte. At this time, the L value was measured in micrometers, and the A value was determined as 2.5447 $cm^2$. Thereafter, a 2032 standard coin cell (SUS material) was assembled with the separator impregnated with the liquid electrolyte, and constant voltage impedance measurement was performed under the conditions of initial voltage of 0 V and 5 mV amplitude in a range of 100 MHz to 100 mHz with IM6 equipment available from Zahner GmbH. The real part impedance value R when the imaginary part value was 0 was calculated by the measured impedance equivalent circuit fitting.

**5. Analysis of capacity implementation rate**

A single-plate cell manufactured so that a theoretical design capacity was 80 mAh was charged/discharged from 2.7 V (constant current) to 4.3 V (constant current constant voltage) with 0.1 C in the first cycle, 0.2 C in the second cycle, and then 0.5 C in the third cycle, and then the capacity was measured. The capacity implementation rate was calculated as a percentage of a ratio between the measured capacity and the theoretical design capacity.

6. scanning electron microscopy (SEM) analysis

Samples were platinum coated using a Quorum technologies Q150V S Plus model at 20mA/30sec. SEM analysis was then performed using a Hitachi s4800 model at 5kV, 10uA.

**<Example 1>**

**Manufacture of separator**

A dispersion in which boehmite (Al(OOH)) nanofibers having an average diameter of 4 nm and a length of 1.5 $\mu$m when observed with scanning electron microscopy (SEM) were uniformly dispersed at 1 wt% in distilled water was formed into a boehmite film having a thickness of 20 $\mu$m using a vacuum filtration method, and then moisture was removed using freeze drying. The manufactured porous boehmite separator had a thickness of 20 $\mu$m, a weight per area of 29.6 g/m$^2$, and a porosity of 51.20%.

**Manufacture of electrolyte**

60 g of succinonitrile (SN) was heated to 60°C and melted, and then 20 g of LiFSi and 4 g of FEC (fluoroethylene carbonate) were added to prepare an electrolyte.
The phases at room temperature for the different compositions are shown in Table 1 below.

[Table 1]

| succinonitrile:LiFSI (Weight ratio) | Phase at room temperature | Haze measurement (%) |
|---|---|---|
| 1:1 | Solid | 99.2 |
| 1.5:1 | Solid | 98.5 |
| 2:1 | Gel | 85 |
| 2.5:1 | Gel | 82 |
| 3:1 | Liquid | 0 |
| 5:1 | Liquid | 0 |
| 6:1 | Liquid | 0 |
| 6.5:1 | Liquid | 0 |
| 7:1 | Gel | 75 |
| 10:1 | Solid | 98.12 |

**Manufacture of battery**

Manufacture of positive electrode: 92 wt% of a lithium cobalt composite oxide (LiCoO$_2$) as a positive electrode active material, 4 wt% of carbon black as a conductive material, and 4 wt% of polyvinylidene fluoride (PVdF) as a binder were added to N-methyl-2-pyrrolidone (NMP) as a solvent to prepare a positive electrode mixture slurry. The prepared slurry was applied on an aluminum (Al) thin film having a thickness of 30 $\mu$m and dried at a temperature of 120°C, and roll-pressing was performed to manufacture a positive electrode having a thickness of 140 $\mu$m.
Manufacture of negative electrode: 96 wt% of graphite carbon, 3 wt% of PVdF as a binder, and 1 wt% of carbon black as a conductive material were added to NMP as a solvent to prepare a negative electrode mixture slurry. The prepared slurry was applied on a copper (Cu) thin film having a thickness of 20 $\mu$m and dried at 120 °C, and rolling pressing was performed to manufacture a negative electrode having a thickness of 150 $\mu$m.
The manufactured separator was applied between the positive electrode and the negative electrode to assemble a pouch type battery, and 2 g of the previously manufactured liquid electrolyte was injected into each assembled battery to manufacture a lithium secondary battery. Thus, a pouch type lithium ion secondary battery having a capacity of 80 mAh was manufactured.

**<Example 2>**

A battery was manufactured referring to Example 1, except that filter paper made of glass fiber was used as the separator (Whatman, UK). The glass fiber separator had a thickness of 260 $\mu$m, a weight per area of 205.0 g/m$^2$, and a porosity of 64.20%.

**<Example 3>**

A battery was manufactured referring to Example 1, but the separator was manufactured by the following method. Boehmite (Al(OOH)) particles having an average diameter of 300 nm and polyvinylidene fluoride (PVDF, weight average molecular weight (Mw) : 300,000 g/mol) were mixed at a weight ratio of 8:2 in dimethylformamide (DMF) to prepare a slurry having a solid content of 50 wt%. The prepared slurry was cast and dried on a polytetrafluoroethylene (PTFE) substrate, and then peeled off to manufacture a porous separator. The ceramic composite separator had a thickness of 200 $\mu$m, a weight per area of 340.0 g/m$^2$, and a porosity of 35.90%.

**<Example 4>**

A battery was manufactured referring to Example 3, except that BaTiO$_3$ particles (average diameter: 300 nm) was used instead of boehmite.

**<Comparative Examples 1 and 2>**

Batteries were manufactured referring to Example 1, but polyethylene (PE) having a thickness of 9 $\mu$m and a polypropylene (PP) microporous membrane having a thickness of 9.1 $\mu$m (SK Innovation, average pore size: 40 nm) were used as the separator, respectively. The weight per area and the porosity of the separators were 5.1 g/m$^2$ and 40.35%, and 5.2 g/m$^2$ and 42.92%, respectively.

**<Comparative Example 3>**

A battery was manufactured referring to Example 1, but the separator was manufactured as follows. 3 parts by weight of polyacrylamide (Mw 150,000 g/mol, Sigma Aldrich) was added to water with respect to 100 parts by weight of boehmite ($\gamma$-AlO(OH)) having an average diameter of 300 nm, and 0.7 parts by weight of a dispersing agent (BYK-2018) was added with respect to the boehmite and stirred, thereby preparing a uniform aqueous slurry having a solid content of 30 part by weight%. The prepared slurry composition, as a water-based slurry, was coated on both surfaces of a polyethylene microporous film having a thickness of 9 $\mu$m (ENPASS, SK Innovation, average pore size: 40 nm) as a substrate using bar coating at a speed of 10 m/min, and then drying and winding were performed with hot air at 45 °C until there was no more weight loss. The thickness of the double-sided coating layer after drying was 2.0 $\mu$m, respectively. The manufactured porous separator had a thickness of 13 $\mu$m, a weight per area of 9.3 g/m$^2$, and a porosity of 46.83%.

The components and the physical properties of the separators manufactured in the examples and the comparative examples are summarized and shown in the following Table 2.

[

Table 2]

| | Hydrophilic ceramic separator | | | | Hydrophobic polymerseparator | | Coating separator |
|---|---|---|---|---|---|---|---|
| | Example 1 | Example 2 | Example 3 | Example 4 | Comparative Example 1 | Comparative Example 2 | Comparative Example 3 |
| Component | Al(OOH) nanofiber | Glas nanofiber | Al(OOH)/ PVDF (8:2) | BaTiO$_3$/ PVDF (8:2) | PE | PP | PE/Al(OOH) |
| Thickness($\mu$m) | 20 | 260 | 200 | 200 | 9.0 | 9.1 | 13.0 |
| Weightperarea(g/m$^2$) | 29.6 | 205.0 | 340.0 | 520.0 | 5.1 | 5.2 | 9.3 |

(continued)

| | Hydrophilic ceramic separator | | | | Hydrophobic polymerseparator | | Coating separator |
|---|---|---|---|---|---|---|---|
| | Example 1 | Example 2 | Example 3 | Example 4 | Comparative Example 1 | Comparative Example 2 | Comparative Example 3 |
| Porosity (%) | 51.20 | 64.20 | 35.90 | 36.20 | 40.35 | 42.92 | 46.83 |

**<Experimental Examples>**

The physical properties of the separators and the batteries manufactured in the examples and the comparative examples were analyzed according to the test method. The results are shown in the following Table 3.

[Table 3]

| | Example 1 | Example 2 | Example 3 | Example 4 | Comparative Example 1 | Comparative Example 2 | Comparative Example 3 |
|---|---|---|---|---|---|---|---|
| Contactangele (°) | 9 | 10 | 11 | 11 | 90 | 90 | 15 |
| Spreading rate (cm/10 s) | 1.4 | 12 | 0.9 | 0.9 | 0.1 | 02 | 0.5 |
| Ionic conductivity (S/cm) | $8.0\times10^{-4}$ | $8.4\times10^{-4}$ | $6.4\times10^{-4}$ | $7.4\times10^{-4}$ | $0.0012\times10^{-4}$ | $0.0007\times10^{-4}$ | $0.0016\times10^{-4}$ |
| Caprity implementation rate (%) | 99 | 99 | 97 | 97 | 31 | 27 | 36 |

As confirmed from Table 3, it was found that since the separators of the examples which were manufactured using the hydrophilic inorganic fibers or manufactured by mixing hydrophilic inorganic particles and the polymer binder all had the contact angle of about 15° or less, they had excellent wettability to an electrolyte, and since they had the spreading rate of 0.9 cm/10 s or more, securing of high ionic conductivity was allowed. Specifically, as a result of analyzing the ionic conductivity, the separators of the examples had significantly high ionic conductivity than the separators of the comparative examples. In addition, since the batteries manufactured in the examples all had a capacity implementation rate of about 97% or more, high capacity of the battery was allowed, unlike the comparative examples.

The disclosed technology relates to an electrochemical device including a porous separator of the hydrophilic inorganic particle or fiber. The electrochemical device based on an embodiment may implement high ionic conductivity by an electrolyte including a nitrile-based compound and a porous separator having excellent wettability to the electrolyte.

The disclosed technology for electrochemical devices can be implemented in various applications, including secondary batteries or rechargeable batteries that are widely used in electric vehicles, uninterruptible power supplies, battery storage power stations, and others including battery power storage for solar panels, wind power generators and other green tech power generators. Specifically, the disclosed technology can be implemented in some applications to provide secondary batteries that can improve the battery reliability and performance and, accordingly, to mitigate climate change. Secondary batteries based on the disclosed technology can be used to address various adverse effects such as air pollution and greenhouse emissions by powering electric vehicles (EVs) as alternatives to vehicles using fossil fuel based engines and by providing battery based energy storage systems (ESS) to store renewable energy such as solar power and wind power.

While the disclosed technology has been illustrated and described with respect to specific embodiment, it should be understood that various enhancements and modifications of the disclosed embodiments and other embodiments may be made based on what is described and illustrated in this patent document.

**Claims**

1. An electrochemical device comprising:

a positive electrode;

a negative electrode;

a separator disposed between the positive electrode and the negative electrode; and

an electrolyte disposed in the electrochemical device to allow ions to pass between the positive electrode and the negative electrode,

wherein the separator includes a porous separator that includes: inorganic fibers or inorganic particles, and optionally a polymer binder, and

wherein the electrolyte includes a nitrile-based compound.

2. The electrochemical device of claim 1, wherein the nitrile-based compound includes one or more of succinonitrile, (3,4-dimethoxyphenyl)acetonitrile, 2-(4-bromo-2-methoxyphenyl)acetonitrile, 2-fluorophenylacetonitrile, 2-chloro-4-fluorophenylacetonitrile, 4-fluorophenylacetonitrile, glutaronitrile, adiponitrile, pimelonitrile, suberonitrile, nonanedinitrile, sebaconitrile, undedecanedinitrile, or dodecandinitrile.

3. The electrochemical device of claim 1 or 2, wherein the electrolyte further includes a lithium salt,

preferably wherein a weight ratio between the nitrile-based compound and the lithium salt is 1:10 to 10:1,
and/or preferably wherein the lithium salt includes one or more of lithium bis(trifluoromethanesulfonyl)imide (LiTFSI), lithium bis(fluorosulfonyl)imide (LiFSI), lithium bis(oxalato)borate (LiBOB), $(C_2F_5SO_2)_2NLi$, LiCl, LiBr, LiI, $LiClO_4$, $LiBF_4$, $LiB_{10}Cl_{10}$, $LiPF_6$, $LiCF_3SO_3$, $LiCF_3CO_2$, $LiC_4BOs$, $LiAsF_6$, $LiSbF_6$, $LiAlCl_4$, $CH_3SO_3Li$, $(CF_3SO_2)_3CLi$, $LiBF_2(C_2O_4)$, $LiAlO_2$, or $LiN (C_xF_{2x+1}SO_2)(C_yF_{2y+1}SO_2)$, wherein x and y are natural numbers.

4. The electrochemical device of any one of claims 1 to 3, wherein the inorganic particles include hydrophilic inorganic particles,

preferably wherein the inorganic hydrophilic particles include one or more of a glass, $Al_2O_3$, boehmite (AlOOH), $SiO_2$, $SnO_2$, $ZrO_2$, $TiO_2$, SiC, $Si_3N_4$, CaO, MgO, ZnO, $BaTiO_3$, $LiAlO_2$, $BaSO_4$, $CaCO_3$, $Y_2O_3$, or $CeO_2$.

5. The electrochemical device of any one of claims 1 to 4, wherein the inorganic fibers include hydrophilic inorganic fibers, preferably wherein the hydrophilic inorganic fibers include one or more of a glass, $Al_2O_3$, boehmite (AlOOH) , $SiO_2$, $SnO_2$, $ZrO_2$, $TiO_2$, SiC, $Si_3N_4$, CaO, MgO, ZnO, $BaTiO_3$, $LiAlO_2$, $BaSO_4$, $CaCO_3$, $Y_2O_3$, or $CeO_2$.

6. The electrochemical device of any one of claims 1 to 5, wherein the inorganic particles have an average particle size of 1 nm to 100 $\mu$m,
and/or wherein the inorganic fibers have an average length of 50 nm to 1 mm, or an average diameter of 1 nm to 5 $\mu$m.

7. The electrochemical device of any one of claims 1 to 6, wherein the polymer binder is present and further includes a fluorinated polymer binder,
preferably wherein the fluorine-based polymer includes one or more of polyvinylidene fluoride (PVDF), polyvinylidene fluoride-co-hexafluoropropylene (PVDF-co-HFP), or polytetrafluoroethylene (PTFE).

8. The electrochemical device of any one of claims 1 to 7, wherein the electrolyte adopts a liquid phase or a gel phase at room temperature,
optionally wherein adopting the liquid phase or the gel phase at room temperature is determined as follows:

when the electrolyte is placed in a quartz cell of $10\times40\times50$ mm and allowed to stand at room temperature for 12 hours, and then a haze is measured using a colorimeter with the electrolyte being spaced 100 mm vertically from a halogen lamp under conditions of a rated voltage of 12 V and a power consumption of 50 W,
the liquid electrolyte has the haze of 50% or less and the gel phase electrolyte has the haze of more than 50% and less than 90%.

9. The electrochemical device of any one of claims 1 to 8, wherein at least a part of the electrolyte is disposed within pores of the separator.

10. The electrochemical device of any one of claims 1 to 9, wherein the electrolyte further includes a carbonate-based additive of 0.1 wt% to 10 wt% with respect to the total weight of the electrolyte.

11. The electrochemical device of any one of claims 1 to 10, wherein the separator does not make use of a polyolefin-based film or a hydrophobic polymer film,

and/or
wherein the electrolyte is formed of only the nitrile-based compound, or of only the nitrile-based compound and the lithium salt, or of only the nitrile-based compound, the lithium salt and the carbonate-based additive.

12. The electrochemical device of any one of claims 1 to 11, wherein the separator has at least one of the following properties, respectively alone or in combination:

    i) a thickness of 1 $\mu$m to 500 $\mu$m,
    ii) a contact angle of the separator to the electrolyte is 5° to 50°,
    iii) an ionic conductivity is $0.1 \times 10^{-4}$ S/cm or more, and/or
    iv) a porosity is 20% to 70%.

13. The electrochemical device of any one of claims 1 to 12, wherein the electrochemical device includes a lithium secondary battery.

14. Use of a combination of a film or a separator and an electrolyte, wherein the film or the separator includes a porous film or separator that includes: inorganic fibers or inorganic particles, and optionally a polymer binder; and wherein the electrolyte includes a nitrile-based compound,
for providing wettability of the film or separator with the electrolyte including the nitrile-based compound, optionally for further providing thermal stability, nonflammability and fire stability.

15. Use of the electrochemical device according to any one of claims 1 to 13, or use of the combination of a film or separator and an electrolyte according to claim 14,
respectively in methods for manufacturing electric vehicles, uninterruptible power supplies, battery storage power stations, solar panels, and/or wind power generators.

FIG. 1

FIG. 2

Europäisches
Patentamt

European
Patent Office

Office européen
des brevets

## EUROPEAN SEARCH REPORT

**Application Number**

EP 25 15 9629

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0053353 A (LG ENERGY SOLUTION LTD [KR]) 29 April 2022 (2022-04-29) * paragraphs [0063], [0064], [0066], [0081], [0112], [0118], [0133], [0134], [0148], [0149]; examples 1,2 * ----- | 1-15 | INV. H01M50/44 H01M50/443 H01M10/056 |

**TECHNICAL FIELDS SEARCHED (IPC)**

H01M

The present search report has been drawn up for all claims

| Place of search | Date of completion of the search | Examiner |
|---|---|---|
| Munich | 23 July 2025 | Möller, Claudia |

EPO FORM 1503 03.82 (P04C01)

## ANNEX TO THE EUROPEAN SEARCH REPORT
## ON EUROPEAN PATENT APPLICATION NO.

EP 25 15 9629

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2025

| Patent document cited in search report | Publication date | Patent family member(s) | Publication date |
|---|---|---|---|
| KR 20220053353 A | 29-04-2022 | NONE | |

For more details about this annex : see Official Journal of the European Patent Office, No. 12/82